Europäisches Patentamt

European Patent Office

Office européen des brevets

(19)

(11) Numéro de publication : **0 124 464**
**B1**

(12) **FASCICULE DE BREVET EUROPÉEN**

(45) Date de publication du fascicule du brevet :
30.11.88

(51) Int. Cl.⁴ : **B 28 D 1/30**, B 28 D 1/08,
B 23 Q 35/10

(21) Numéro de dépôt : 84450012.4

(22) Date de dépôt : 27.04.84

(54) **Scie a fil pour le moulurage de pierres, de granits et autres.**

(30) Priorité : 27.04.83 FR 8305479

(43) Date de publication de la demande :
07.11.84 Bulletin 84/45

(45) Mention de la délivrance du brevet :
30.11.88 Bulletin 88/48

(84) Etats contractants désignés :
AT BE CH DE FR GB IT LI LU NL SE

(56) Documents cités :
DE-A- 2 754 200
DE-C- 108 526
FR-A- 414 400
FR-A- 617 990
FR-A- 638 027
US-A- 2 803 239
US-A- 2 866 448

(73) Titulaire : **Roujon, Auguste**
**28 Place Frédéric Bompaire**
**F-12100 Millau (FR)**

(72) Inventeur : **Roujon, Auguste**
**28 Place Frédéric Bompaire**
**F-12100 Millau (FR)**

(74) Mandataire : **Ravina, Bernard**
**Cabinet Bernard RAVINA 24, boulevard Riquet**
**F-31000 Toulouse (FR)**

## Description

La présente invention concerne une scie à fil pour le moulurage de pierres, de granits et autres.

Les scies à fil qui existent à l'heure actuelle sont conçues pour obtenir seulement des tranches ou des surfaces planes et scient uniquement dans le sens vertical.

Ces scies à fil traditionnelles, sont composées d'un châssis fixe présentant la forme d'un portique dont les montants sont constitués par des poutrelles en « U » formant glissières.

Dans ces montants, coulisse en montée ou descente un bloc palier portant une poulie à fil.

Ces blocs paliers sont supportés chacun par un câble enroulé sur un cylindre disposé en haut du montant et passant par une poulie en bas du dit montant.

La descente en cours de sciage est commandée par un système de descente automatique donc en vitesse de descente régulière et constante.

Le chariot porte-blocs est immobile en cours de sciage.

Ce système ne peut donc être appliqué qu'à un sciage vertical de surfaces planes.

Il est à noter toutefois qu'il est connu par le brevet américain 2 803 239 une scie permettant de réaliser du moulurage.

Cette scie à fil selon ce brevet est dotée d'un portique dans lequel coulisse un châssis mobile en translation vertical suspendu par des contrepoids sur le portique et entraîné vers le bas pour le sciage par un moteur.

Les blocs à moulures sont placés sur un ensemble pivotant disposé sur un chariot mobile en translation horizontale.

Le montage des blocs selon ce brevet sur un ensemble pivotant puis sur un chariot mobile en translation est très complexe et ne pourrait au mieux que réaliser des pièces de petit volume et de faibles dimensions.

La vitesse de descente du châssis mobile n'est fonction que de son moteur d'entraînement vers le bas et ne dépend pas de la forme du profil à réaliser.

Cette descente est réglée en fonction de la flèche du fil de sciage.

Lorsque la flèche atteint un certain niveau, il y a arrêt de la descente jusqu'à ce que le fil reprenne une position horizontale.

Il en est de même pour le déplacement du chariot qui est commandé en fonction de la position du fil par rapport au modèle à réaliser.

Il y a donc indépendance des mouvements de descente et de déplacement horizontal même si ceux-ci peuvent se faire par moment simultanément.

Il est à noter cependant que ce type de commande de sciage en fonction de la position du fil et de sa flèche provoque sur la pièce à travailler un sciage en dents de scie.

La scie à fil selon l'invention permet de réaliser un très grand nombre d'opérations dans le domaine du sciage et du débitage des pierres, des granits ou autres.

Plus particulièrement, la scie à fil permet d'obtenir le façonnage de parties courbes sur dalles de pierre ou de granit de toutes dimensions couramment employées.

A cet effet, la scie à fil selon l'invention comporte un châssis fixe vertical pourvu d'au moins une poulie à fil, un châssis vertical mobile en translation dans le dit châssis fixe et portant des poulies à fil entre lesquelles se déplace le fil de sciage, des moyens d'actionnement en translation du châssis vertical mobile dans le châssis fixe comprenant un contrepoids, un chariot porte blocs disposé sous le châssis mobile, des moyens pour le déplacement en translation du dit chariot porte blocs, un dispositif tendeur de fil, une pompe et un appareil distributeur d'abrasif et se caractérise en ce qu'elle comporte un bras guide vertical solidaire par une de ses extrémités du châssis vertical mobile et doté à son extrémité d'un roulement et un panneau guide solidaire du chariot porte blocs et dans lequel est ménagée une ouverture à la forme de la moulure en ce que le chariot porte blocs est commandé en translation par un contrepoids et en ce que le bras guide par son roulement coopère avec l'ouverture du panneau guide pour définir les vitesses de la descente du châssis vertical mobile et/ou du déplacement du chariot porte blocs en fonction du degré d'inclinaison de la partie de l'ouverture en contact duquel se trouve le roulement du bras guide, les vitesses maximales de déplacement du châssis mobile vertical et du chariot porte blocs étant réglées par action de leurs contrepoids respectifs.

D'autres avantages et caractéristiques apparaîtront dans la description et en se référant aux dessins annexés d'une forme de réalisation donnée à titre d'exemple non limitatif en lesquels

- la figure 1 est une vue de la face arrière de la scie à fil selon l'invention,
- la figure 2 est une vue de côté de la scie à fil,
- la figure 3 est une vue de dessus de la scie à fil,
- la figure 4 est une vue du chariot porte blocs de la scie à fil selon l'invention,
- la figure 5 est une vue en coupe du panneau guide doté d'une fiche selon la ligne AA de la figure 4.

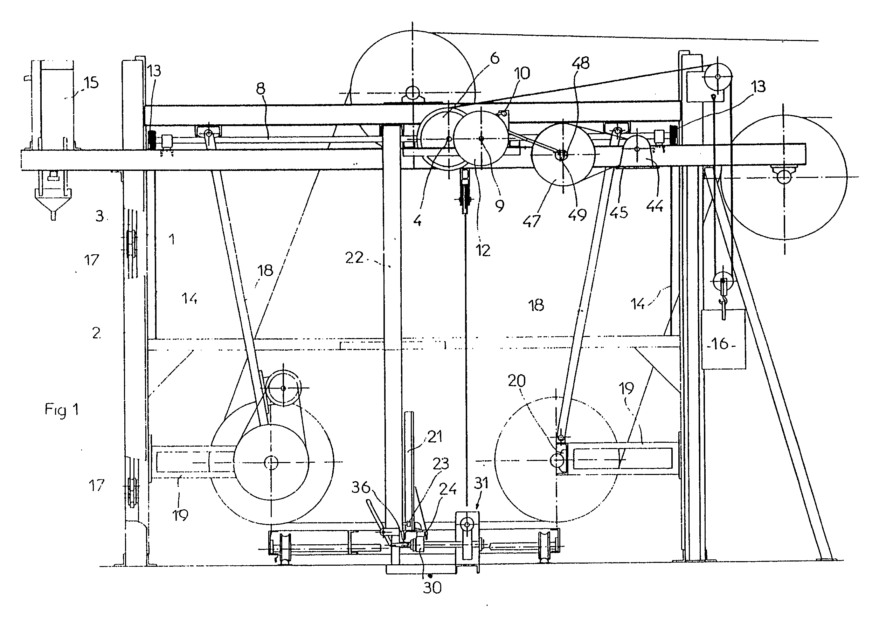

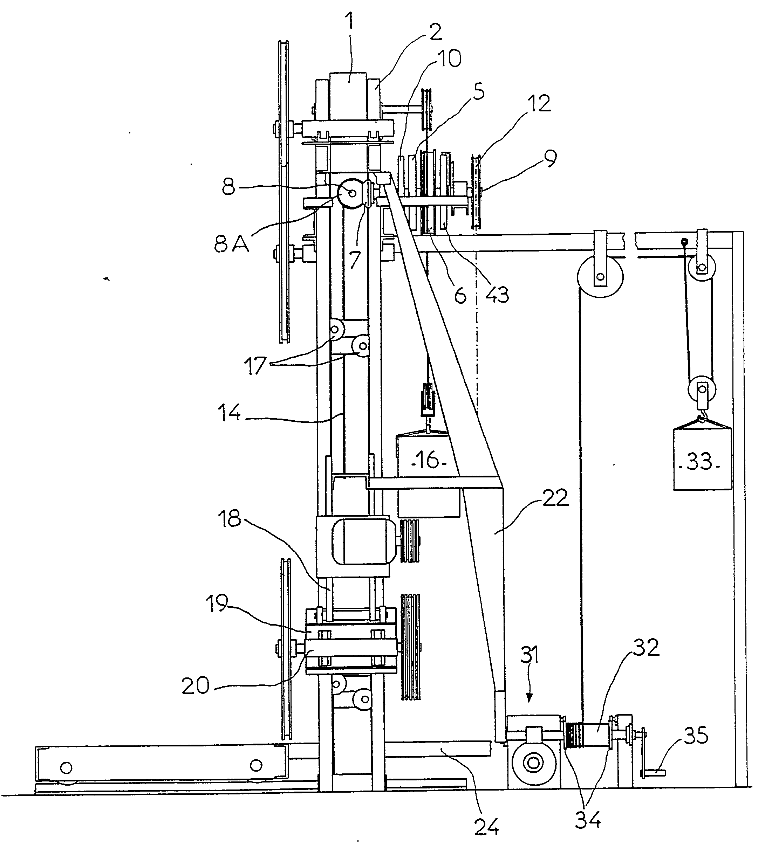

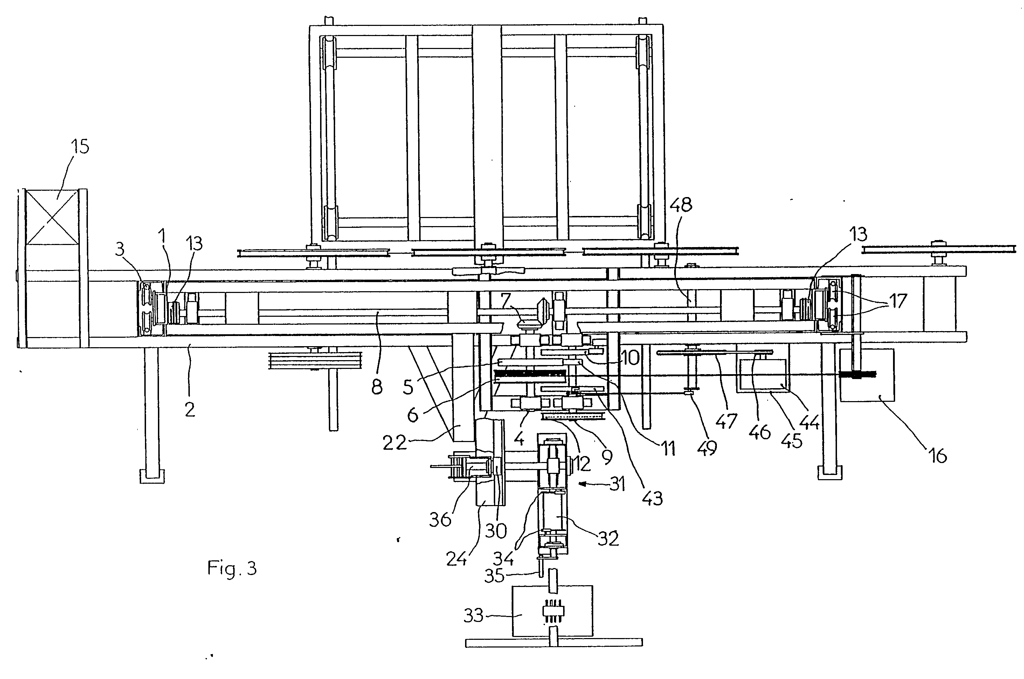

La scie à fil pour le moulurage des pierres et granits telle que représentée aux figures 1, 2 et 3 est composée d'un châssis mobile vertical 1 se mouvant dans un châssis fixe 2 avantageusement étayé.

Suivant une forme préférentielle de réalisation de la scie à fil selon l'invention, le châssis fixe se compose de deux poutrelles en « U » munies chacune sur toute leur longueur d'un rail 3.

Préférentiellement, ces poutrelles sont reliées entre elles en leur extrémité supérieure par deux longerons de profil en « U ».

Etant donné que les moulures sont de formes diverses, présentant des degrés d'inclinaison plus ou moins accentuées, parfois des parties verticales, parfois des parties horizontales, le système de descente automatique de type connu ne peut être appliqué; la vitesse de descente étant variable.

A cet effet, sur les longerons de profil en « U » est fixé un cadre portant les moyens servant à la descente et à la remontée du châssis mobile 1.

Les dits moyens portés par le cadre sont constitués par un arbre 4 portant une roue dentée 5, un tambour 6 pour l'enroulement d'un câble servant à la remontée ou à la descente d'un contrepoids 16, un pignon conique 7 pour l'entraînement d'un arbre 8 et par un arbre 9 comportant un rochet 10 doté d'un cliquet pour bloquer la descente, d'une roue dentée 11 pour la démultiplication avec la roue dentée 5 de l'arbre 4, un volant de manœuvre à chaîne 12 et un rochet 4 pour descente automatique et son système d'embrayage.

Sur les longerons du châssis fixe, dans le sens de leur longueur est monté l'arbre 8 entraîné par le pignon conique 7 par engrènement d'un autre pignon conique 8A fixé sur le dit arbre.

Suivant une forme préférentielle, l'arbre 8 porte à chacune de ces extrémités un tambour 13 d'enroulement d'un câble 14 dont les extrémités sont respectivement fixées sur le dit tambour et sur le châssis mobile 1.

Sur une extrémité des longerons du châssis fixe 2 est placé le récipient distributeur 15 du liquide chargé d'abrasif et sur l'autre extrémité est montée dans ses paliers une poulie à fil.

Sur la partie supérieure d'un des montants est fixé un support de contrepoids 16 relié par câble au tambour 6 monté sur l'arbre 4.

Ce contrepoids 16 a pour but de contrebalancer le poids du châssis mobile 1 et lui permettre la descente libre seulement nécessaire.

Préférentiellement, le châssis mobile 1 est composé de deux montants formés chacun d'un profilé en « U » sur lequel sont fixés au moins un galet 17 circulant sur les rails 3 des montants du châssis fixe 2.

A proximité de leur extrémité supérieure, ces montants sont solidaires par des longerons en « U ».

Un autre longeron en « U » est fixé à mi-hauteur des montants du châssis mobile 1.

Les câbles 14 s'enroulant sur les tambours 13 solidaires de l'arbre 8 sont fixés sur ce longeron intermédiaire.

Sous les longerons supérieurs sont fixés les supports de deux bras 18 destinés au rapprochement des poulies à fil.

En effet, l'écartement entre celles-ci pour le moulurage peut varier suivant l'importance des courbes et la longueur de la pièce à scier.

Les poulies doivent être le plus près possible du bloc afin d'obtenir une bonne tension du fil et éviter toute flèche.

Chacun de ces bras comprend deux pièces qui sont placées de chaque côté contre le longeron de mi-hauteur, afin d'éviter tout déplacement latéral et toute vibration.

Deux intercalaires 19 télescopiques, placés entre les montants et les supports de blocs paliers 20 des poulies à fil, assurent cet écartement.

Le châssis mobile 1 est indispensable dans le cas de moulurage, la descente étant variable doit donc être libre.

C'est, par conséquent, le poids de ce châssis mobile qui assure la descente.

Cette descente est limitée par le contrepoids 16 à une vitesse d'environ un centimètre par minute pour un moulurage sur granit.

Cette vitesse est limitée et devient différentielle par ce que lui permet un panneau guide 21 préparé à la forme de la moulure désirée.

Avantageusement, un autre moyen de descente est envisagé, constitué par un système de descente automatique mais permettant une vitesse de descente différentielle.

A cet effet, le système est conçu de la manière suivante :

Tout d'abord, il faut assurer l'équilibre entre le poids du châssis mobile 1 et la charge du contrepoids 16.

Un moto réducteur 44 d'une puissance déterminée par exemple 0,5 cv donnant une vitesse réduite est placé sur une plate-forme 45 fixée sous l'aile inférieure d'un longeron du châssis fixe 2 (figure 1).

Sur l'arbre du moto réducteur 44 est monté un pignon reliant une roue dentée 47 par l'intermédiaire, de préférence, d'une chaîne galle. La dite roue dentée est montée sur un arbre 48 disposé sur le longeron du châssis fixe 2.

La vitesse de rotation du moto réducteur 44 est donc diminuée. A une extrémité de cet arbre 48 est disposé un excentrique 49.

Sur l'arbre 9 est placée une roue à rochets 43 tournant librement sur cet arbre à l'aide d'un roulement.

Une coulisse disposée sur ce même arbre et pourvue d'un patin d'embrayage poussée par un ressort vient s'appuyer sur le moyen de la roue à rochets 43.

Un bras portant une lumière pivotant sur l'arbre 9 et muni d'un cliquet vient pousser les dents de la roue à rochets 43 entraîné pour cela par une bielle reliée à l'excentrique 49.

Le rochet ainsi entraîné fait tourner l'arbre 9 provoquant la descente tant qu'aucun obstacle ne vient s'y opposer.

Dans le cas de résistance provoquée par la forme du panneau guide 21, le patin d'embrayage patine sur le moyen de la roue à rochets 43.

La vitesse de descente est réglée par le nombre de dents pris par le cliquet.

Le châssis mobile est aussi équipé sur sa partie arrière d'un bras guide 22 au bas duquel se trouve un roulement 23 solidaire d'une tige filetée qui en assure le retrait ou l'avancement du panneau-guide 21.

Ce bras guide 22 fixé solidement sous les longerons supérieurs du châssis mobile 1, est avantageusement étayé sur le longeron de mi-hauteur pour lui éviter des mouvements oscillatoires et est également renforcé, sur ces ailes.

Le bras guide soutient dans la descente, pour la part qui lui est réservée par le contrepoids 16, l'ensemble du châssis mobile 1 en cours de travail, en prenant appui sur le panneau guide 21 qui sera décrit plus avant.

Suivant une caractéristique de la scie à fil selon l'invention, le chariot contrairement aux chariots porte blocs couramment utilisés est doté d'un timon 24.

Ce timon est surmonté sur toute sa longueur d'une petite cornière 25 préférentiellement soudée sur le dit timon.

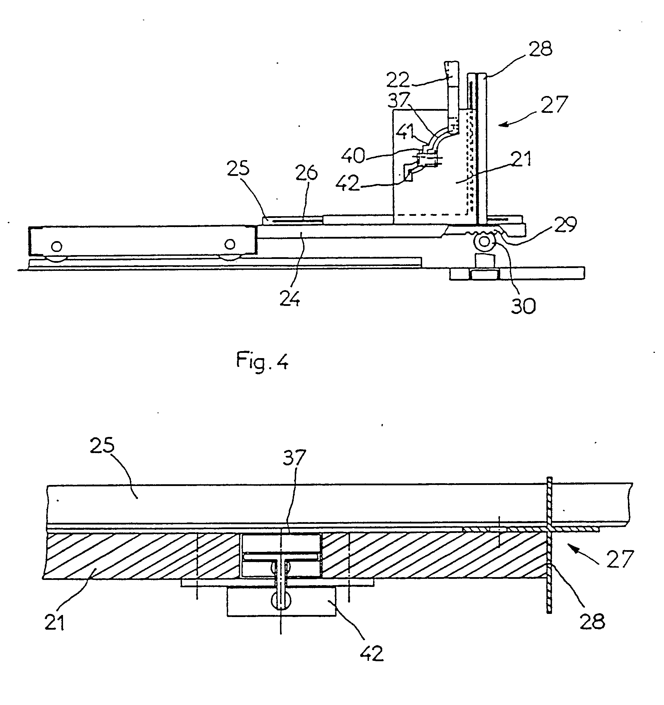

La dite cornière est percée sur la presque totalité de sa longueur d'une lumière 26 (fig. 4).

Contre cette cornière 25 est fixée une équerre 27 par l'intermédiaire de sa branche horizontale munie par exemple de deux boulons coopérant avec la lumière 26.

L'équerre 27 peut se déplacer le long de la cornière 25 de part la forme de la lumière 26.

La branche verticale de l'équerre 27 est de préférence en forme de croix 28 pour en assurer la stabilité et est pourvue d'une lumière pour positionner le panneau guide 21.

Le déplacement du chariot est actionné par exemple par une crémaillère 29 située au-dessus du timon 24.

La commande pour le déplacement du chariot dans un sens ou dans l'autre est assurée par des moyens de préférence mécaniques.

Ces moyens sont constitués par un engrenage 30 coopérant avec la crémaillère 29, par un engrenage à vis 31 monté sur l'arbre portant l'engrenage 30 dont le rapport vis-couronne est compris entre 1/20 et 1/25, par un tambour 32 pour l'enroulement d'un câble relié à un contrepoids 33.

Le tambour 32 est monté sur l'arbre à l'extrémité duquel est fixée la vis de l'engrenage à vis 31.

Compte tenu de la démultiplication, il suffit de mettre la charge nécessaire au contrepoids 33 pour assurer le déplacement du chariot suivant la charge qu'il transporte.

La vitesse de déplacement doit être réglée comme pour la descente du châssis mobile 1 à environ un centimètre par minute, le panneau guide 21 règle ensuite la vitesse différentielle.

La circonférence des flasques du tambour 32 est taillé en rochet 34 pour bloquer si nécessaire le déplacement du chariot, l'un de la marche avant, l'autre de la marche arrière suivant le sens d'enroulement du câble.

A une extrémité de l'arbre portant la vis, est placée une manivelle 35 qui permet la remontée du contrepoids 33.

A cet effet et afin d'éviter le déplacement du chariot, l'engrenage 30 entraînant la crémaillère 29 est débrayé par un système de débrayage 36.

Le panneau guide représenté en figure 4, est de préférence réalisé en bois dur et donne la forme exacte de la moulure que l'on veut obtenir. Le rayon du roulement 23 situé au bas du bras guide 22 porté de chaque côté de la ligne de profil de la moulure 37 donne la largeur de l'ouverture ménagée dans le panneau guide 21, sensiblement augmentée pour obtenir un jeu nécessaire au déplacement du roulement 23 dans cette ouverture.

C'est une des parois de cette ouverture, suivant le sens de marche du chariot, qui constitue les points de retenue de la descente du châssis 1 et du déplacement du chariot.

C'est donc le degré d'inclinaison de la partie de paroi contre laquelle se trouve le roulement qui définit la vitesse différentielle de la descente du châssis mobile et/ou celle du déplacement du chariot. L'axe du roulement et le fil de sciage restant toujours équidistants, c'est la forme de la moulure qui se reproduit sur le bloc.

Suivant la forme des moulures telles que celle représentée à la figure 4 le roulement 23 peut prendre une direction contraire 41 avant d'être parvenu au terme du parcours 40 qui lui est fixé.

Afin d'éviter cet incident, l'utilisateur peut bloquer le parcours contraire en abaissant sur le tambour 32 le cliquet sur le rochet du parcours concerné.

Mais ce mode de réalisation nécessite la présence constante de l'utilisateur.

Suivant un autre mode de réalisation, l'utilisateur peut apposer sur le panneau guide une fiche 42 qui est un prolongement du parcours du roulement 23 pour le conduire à son terme.

Cette fiche 42 est équipée d'un contacteur relié à un temporisateur commandant une sonnerie.

Ce temporisateur est réglé de façon à ce que le roulement arrivé en fin de parcours déclenche la sonnerie qui fonctionne le temps nécessaire pour que puisse se réaliser le rattrapage de la légère flèche qui aurait pu se produire et qui doit être éliminée avant de prendre une nouvelle direction.

Lorsque la sonnerie s'arrête, l'utilisateur retire la fiche 42 et le roulement reprend le parcours qui lui est fixé dans les meilleures conditions pour le sciage.

Le fonctionnement de la scie à fil selon l'invention consiste à placer le bloc à moulurer préalablement sur le chariot, à disposer la ligne de départ de la moulure à l'aplomb du fil, à abaisser celui-ci au contact du bloc, à engager le roulement 23 du bras guide 22 dans la partie supérieure de l'ouverture pratiquée dans le panneau guide 21, à avancer ou reculer l'équerre 27 située sur le timon 24 jusqu'à ce que la partie arrière du panneau 21 soit en parfait contact avec le bras vertical de l'équerre 27, à bloquer la dite équerre, à amener ensuite l'axe du roulement 23 bien en face du point de départ indiqué sur le panneau, celui-ci étant alors bien en place, on bloque les boulons engagés dans la lumière du bras vertical de l'équerre 27.

Les contrepoids 16 et 33 étant réglés à la vitesse adéquate, on procède à la mise en route de la scie à fil selon l'invention de la même manière que pour les appareils à fils traditionnels et on libère ensuite les deux mouvements en relevant les cliquets des rochets de descente et d'avancement.

Il se peut que dans certains cas, on soit obliger de changer le sens de direction du chariot, par exemple le cas d'une tombale bombée.

Dans ce cas, il faut placer sur le panneau guide 21 la fiche 42 au point de changement de direction.

Lorsque le roulement 23 du bras guide 22 parvient à la fiche, il déclenche la sonnerie.

A ce moment, l'engrenage 30 est débrayé, le câble du contrepoids 33 est déroulé puis enroulé dans l'autre sens sur le tambour 32 et le contrepoids est remonté à sa hauteur initiale.

Après ces opérations, l'engrenage 30 est embrayé, la fiche 42 est enlevée du panneau guide 21 et le sciage repart dans sa nouvelle direction.

La scie à fil selon l'invention permet une très grande augmentation de la productivité pour le moulurage de pierres et de granits et permet d'envisager des perspectives nouvelles dans l'emploi des pierres et granits pour le bâtiment en raison notamment d'un abaissement substantiel du prix de revient entraîné par l'utilisation de la scie à fil selon l'invention.

**Revendications**

1. Scie à fil pour le moulurage de pierres, de granits et autres comportant un châssis fixe vertical (2) pourvu d'au moins une poulie à fil, un châssis vertical (1) mobile en translation dans le dit châssis fixe et portant des poulies à fil entre lesquelles se déplace le fil de sciage, des moyens d'actionnement en translation du châssis vertical (1) mobile dans le châssis fixe (2) comprenant un contrepoids (16), un chariot porte blocs disposé sous le châssis mobile (14), des moyens pour le déplacement en translation du dit chariot porte blocs, un dispositif tendeur de fil, une pompe et un appareil distributeur d'abrasif (15), scie à fil caractérisée en ce qu'elle comporte un bras guide (22) vertical solidaire par une de ses extrémités du châssis vertical (1) mobile et doté à son autre extrémité d'un roulement (23) et un panneau guide (21) solidaire du chariot porte blocs et dans lequel est ménagée une ouverture à la forme de la moulure désirée en ce que le chariot porte blocs est commandé en translation par un contrepoids (33) et en ce que le bras guide (22) par son roulement (23) coopère avec l'ouverture du panneau guide (21) pour définir les vitesses de la descente du châssis vertical (1) mobile et/ou du déplacement du chariot porte blocs en fonction du degré d'inclinaison de la partie de l'ouverture en contact duquel se trouve le roulement (23) du bras guide (22), les vitesses maximales de déplacement du châssis mobile vertical et du chariot porte blocs étant réglées par action sur leur contrepoids respectifs (16) et (33).

2. Scie à fil selon la revendication 1 caractérisée en ce que les moyens d'actionnement en translation du châssis vertical (1) mobile dans le châssis fixe (2) sont constitués par un arbre (4) portant une roue dentée (5), un tambour (6) pour l'enroulement d'un câble servant à la remontée ou à la descente du contrepoids (16), un pignon conique (7) pour l'entraînement d'un arbre (8) et par un arbre (9) comportant un rochet (10) doté d'un cliquet pour bloquer la descente, d'une roue dentée (11) engrenant avec la roue (5), un volant de manœuvre à chaîne (12) et un rochet (43) pour descente automatique et son système d'embrayage.

3. Scie à fil selon les revendications 1 et 2 caractérisée en ce que l'arbre (8) entraîné en rotation comporte à chacune de ses extrémités un tambour (13) d'enroulement d'un câble (14) fixé sur le dit tambour et sur le châssis mobile (1).

4. Scie à fil selon les revendications précédentes caractérisée en ce que le châssis mobile (1) comporte deux bras (18) articulés sur le dit châssis et portant chacun sur leur extrémité une poulie à fil afin que les dites poulies puissent être le plus près possible du bloc à scier pour éliminer toute flèche du fil au cours du sciage.

5. Scie à fil selon les revendications précédentes caractérisée en ce que les bras (18) sont écartés des montants du châssis mobile (1) par des intercalaires (19) télescopiques.

6. Scie à fil selon les revendications 1 et 2 caractérisé en ce que les moyens d'actionnement en translation du châssis vertical (1) mobile dans le châssis fixe (2) comportent un moto réducteur (44) doté d'un pignon, d'une roue (47) portée par un arbre (48), d'un excentrique (49) monté sur l'arbre (48), d'une bielle articulée sur l'excentrique (49), d'une roue à rochets (43) montée sur l'arbre (9) entraînée par un cliquet commandé par la bielle.

7. Scie à fil selon les revendications 1, 2 et 6 caractérisée en ce que le système de débrayage de la roue à rochets (43) est constitué par un roulement, une coulisse disposée sur l'arbre (9), un patin d'embrayage, un ressort venant s'appuyer sur le moyeu de la roue à rochets (43).

8. Scie à fil selon la revendication 1 caractérisée en ce que le chariot porte bloc est doté d'un timon (24) sous lequel est fixée une crémaillère (29) entraînée par un pignon (30) actionné par le contrepoids (33) après démultiplication.

9. Scie à fil selon la revendication 1 caractérisée en ce que sur le panneau guide (21) est montée au moins une fiche (42) équipée d'un contacteur et d'une temporisation permettant au roulement de suivre le parcours exact de l'ouverture du dit panneau guide et permettant également le rattrapage de la flèche après temporisation.

**Claims**

1. Wire saw for profiling stone, granite and other materials, comprising a fixed vertical frame (2) with at least one wire pulley, a translatory vertical frame within the said fixed frame and including wire pulleys between which the sawing wire moves, translatory devices for moving the mobile vertical frame (1) in the fixed frame (2) comprising a counterweight (16), a block carriage under the mobile frame (1), devices for moving the said block carriage, a wire tightening device, a pump and an abrasive application device (15) ; a wire saw characterized by the fact that it comprises a vertical guide arm (22) joined at one end to the mobile vertical frame (1) and with a bearing (23) at its other end and a guide panel (21) joined to the carriage block and in which there is an aperture in the shape of the required profile characterized by the fact that the movement of the block carriage is driven by a counterweight (33) and by the fact that the guide arm (22) works in tandem with the guide panel aperture (21) via its bearing (23) to set the speed at which the mobile vertical frame (1) descends and/or the speed of movement of the block carriage according to the degree of inclination of the part of the aperture in contact with the guide arm (22) bearing (23), the maximum speeds of movement of the mobile vertical frame and the block carriage being regulated by adjusting their respective counterweights (16) and (33).

2. Wire saw as defined by claim 1 characterized by the fact that the translatory devices for shifting the mobile vertical frame (1) within the fixed frame (2) consist of a spindle (4) supporting a toothed wheel (5), a drum (6) around which is wound a cable used to lift or lower the counterweight (16), a conical gear wheel which drives a spindle (8) and of a spindle (9) comprising a ratchet wheel (10) that stops downward movement, with a toothed wheel (11) that meshes with wheel (5), a chain handwheel (12) and a ratchet wheel (43) for automatic descent and the saw's gearing system.

3. Wire saw as defined in claims 1 and 2 characterized by the fact that the rotary driven spindle (8) comprises at either end a drum (13) around which is wound a cable (14) which is joined to the mobile frame (1).

4. Wire saw as defined in preceding claims characterized by the fact that the mobile frame (1) comprises two arms (18) joined to the said frame and with a wire pulley on either end to ensure that the said pulleys may be as close as possible to the block to be sawn, thus avoiding any deflection of the saw during sawing.

5. Wire saw as defined in preceding claims characterized by the fact that the arms (18) are kept apart from the mobile frame uprights (1) by telescopic spacers (19).

6. Wire saw as defined in claims 1 and 2 characterized by the fact that the translatory devices used to shift the mobile vertical frame (1) within the fixed frame (2) comprise a geared motor (44) with a cog, a wheel (47) supported by a spindle (48), an eccentric (49) attached to the spindle (48), a push-rod joined to the eccentric (49), a ratchet wheel (43) attached to the spindle (9) driven by a ratchet controlled by the rod.

7. Wire saw as defined in claims 1, 2 and 6 characterized by the fact that the ratchet wheel gearing system (43) consists of a bearing, a slide on the spindle (9), a disc of clutch, a spring pressed against the hub of the ratchet wheel (43).

8. Wire saw as defined in claim 1 characterized by the fact that the block carriage includes a beam (24) under which is fixed a rack (29) driven by a gear wheel (30) activated by the counterweight (33) after gearing down.

9. Wire saw as defined in claim 1 characterized by the fact that at least one connector (42) is attached to the guide panel (21), with a switch and a time delay enabling the bearing to follow the exact trace of the said guide panel and also to compensate for any deflection after the time delay.

## Patentansprüche

1. Drahtsäge zum Sicken von Steinen, Graniten und anderen Materialien, bestehend aus einem feststehenden senkrechten Gestell (2), ausgestattet mit mindestens einer Drahtrolle, einem beweglichen senkrechten Gestell (1), auf dem Drahtrollen angebracht sind, zwischen denen sich der Sägedraht bewegt, und das in dem feststehenden Gestell seitlich verschoben werden kann, Vorrichtungen zur Verschiebung des beweglichen senkrechten Gestells (1) in dem feststehenden senkrechten Gestell (2), d. h. einem Gegengewicht (16), einen Schlitten für die Blöcke, der unter dem beweglichen Gestell (1) angebracht ist, Vorrichtungen zur seitlichen Verschieben dieses Schlittens, eine Spannvorrichtung, eine Pumpe und einen Schleifmittelverteiler (15). Diese Drahtsäge zeichnet sich aus durch einen senkrechten Führungsarm (22), dessen eine Ende Teil des beweglichen senkrechten Gestells (1) ist und der am anderen Ende mit Rollen (23) ausgestattet ist, und einem Führungsschild (21), das Teil des Blockschlittens ist und in dem eine Öffnung in Form der erwünschten Sicke ausgespart ist, wobei die seitliche Verschiebung des Blockschlittens durch einem Gegengewicht (33) gesteuert wird und wobei der Führungsarm (22) über seine Rollen (23) mit der Öffnung des Führungsschildes (21) zusammenwirkt, um die Geschwindigkeit zu regeln, mit der sich das bewegliche senkrechte Gestell (1) senkt und/oder die Geschwindigkeit, mit der sich der Blockschlitten bewegt, in Abhängigkeit von der Neigung des Teils der Öffnung, auf dem die Rollen (23) des Führungsarms (22) sitzen, wobei die größten Geschwindigkeiten, mit denen sich das bewegliche senkrechte Gestell und der Blockschlitten bewegen, über das jeweilige Gegengewicht (16) bzw. (33), geregelt werden.

2. Drahtsäge nach Anspruch 1, dadurch gekennzeichnet, daß die Vorrichtungen zur seitlichen Verschiebung des beweglichen senkrechten Gestells (1) in dem feststehenden senkrechten Gestell (2) aus einer Welle (4) mit einem zahnrad (5), einer Trommel (6) zum Aufrollen des Kabels, mit dem das Gegengewicht (16) aufwärts oder abwärts bewegt wird, einem Kegelrad (7) zum Antrieb einer Welle (8) und aus einer Welle (9) mit einem Klinkwerk (10), das mit einer Sperraste versehen ist, um die Abwärtsbewegung zu stoppen, einem Zahnrad (11), das in das Rad (5) greift, einem Bedienungsrad mit Kette (12) und einem Klinkwerk (43) zum automatischen Runterlassen und seiner Feststellvorrichtung bestehen.

3. Drahtsäge nach Anspruch 1 und 2, dadurch gekennzeichnet, daß die Welle (8), die in Drehbewegung versetzt wird, an beiden Enden eine Trommel (13) zum Aufrollen des Kabels (14) trägt, das an dieser Trommel und an dem beweglichen Gestell (1) befestigt ist.

4. Drahtsäge nach den vorstehenden Ansprüchen, dadurch gekennzeichnet, daß am beweglichen Gestell (1) zwei Arme (18) mit Seilrollen an ihren Enden befestigt sind, die gelenkig angebracht sind, damit diese Seilrollen sich so nahe wie möglich an dem zu bearbeitenden Block befinden, um jedes Durchhängen des Seils während des Sägens zu vermeiden.

5. Drahtsäge nach den vorstehenden Ansprüchen, dadurch gekennzeichnet, daß die Arme (18) von den Stützen des beweglichen Gestells (1) durch zusammenschiebbare Trennteile (19) ferngehalter werden.

6. Drahtsäge nach den Ansprüchen 1 und 2, dadurch gekennzeichnet, daß die Vorrichtungen zur seitlichen Verschiebung des beweglichen senkrechten Gestells (1) in dem feststehenden Gestell (2) einen Getriebemotor (44) umfaßt, der ausgestattet ist mit einem Ritzel, einem Rad (47), das auf einer Welle (48) sitzt, einem Exzenter (49) auf der Welle (48), einem Gabelpleuel auf dem Exzenter (49), einem Schaltrad (43) auf der Welle (9), das von einer Sperraste angetrieben wird, die von dem Pleuel gesteuert wird.

7. Drahtsäge nach den Ansprüchen 1, 2 und 6, dadurch gekennzeichnet, daß der Auskuppelmechanismus des Schaltrades (43) aus Rollen, einer auf der Welle (9) angebrachten Führung, einer Kupplungskufe und einer Feder, die auf der Nabe des Schaltrades (43) aufliegt, besteht.

8. Drahtsäge nach Anspruch 1, dadurch gekennzeichnet, daß der Blockschlitten mit einer Deichsel (24) versehen ist, unter der eine Zahnstange (29) angebracht ist, die von einem Ritzel (30) bewegt wird, das nach Untersetzung, von dem Gegengewicht (33) angetrieben wird.

9. Drahtsäge nach Anspruch 1, dadurch gekennezeichnet, daß auf dem Führungsschild (21) mindestens ein Stecker (42) angebracht ist, der mit einem Schütz ausgestattet ist und mit einem Verzögerer, dank dessen die Rollen dem Verlauf der Öffnung dieses Führungsschildes genau folgen können und der es erlaubt, das Nachlassen der Spannung nach einer Verzögerung aufzuheben.

Fig 1

0 124 464

Fig. 2

Fig. 3

0 124 464

Fig. 4

Fig. 5